Europäisches Patentamt

European Patent Office

Office européen des brevets

(19)

(11) Publication number: **0 155 794**

**B1**

(12)                    EUROPEAN PATENT SPECIFICATION

(45) Date of publication of patent specification: **08.06.88**

(51) Int. Cl.⁴: **C 03 B 37/16**

(21) Application number: **85301490.0**

(22) Date of filing: **05.03.85**

(54) **Apparatus and method for notching an optical fiber under controlled conditions.**

(30) Priority: **16.03.84 US 590233**

(43) Date of publication of application:
**25.09.85 Bulletin 85/39**

(45) Publication of the grant of the patent:
**08.06.88 Bulletin 88/23**

(84) Designated Contracting States:
**BE CH DE FR GB IT LI NL SE**

(56) References cited:
**US-A-4 203 539**
**US-A-4 245 537**

(73) Proprietor: **AMP INCORPORATED**
**P.O. Box 3608 449 Eisenhower Boulevard**
**Harrisburg Pennsylvania 17105 (US)**

(72) Inventor: **Ten Berge, Eduardus Franciscus A.**
**14 Hobbemaplein**
**NL-5151 SL Drunen (NL)**
Inventor: **Kreyveld, Marinus Hendrikus**
**30 Laan ten Bogaerde**
**NL-5491 GC Sint Oedenrode (NL)**

(74) Representative: **Gray, Robin Oliver et al**
**BARON & WARREN 18 South End Kensington**
**London W8 5BU (GB)**

EP 0 155 794 B1

Courier Press, Leamington Spa, England.

# Description

This invention relates to methods and apparatus for scribing optical fibers under controlled conditions to produce a notch in preparation for breaking the fiber.

When optical fibers are spliced to each other, it is desirable that the ends of the fibers have a smooth surface which extends substantially normaly of the fiber axis. It is now recognized that if the fiber is carefully notched and then broken under controlled conditions, an excellent surface can be obtained which is as good as the surfaces which were previously obtained by careful polishing of the end of the fiber. A notch is provided at the location of the break in order to concentrate the stresses when the fiber is broken and to cause a crack to propagate across the fiber under controlled conditions which will produce the desirable smooth surface on the end of the fiber after breaking, see "Optical Fiber and Preparation; a New Method for Producing Perpendicular Fractures in Glass Fibers, Coated Glass Fibers, and Plastic-Clad Fibers", G. D. Khoe et al, *Applied Optics,* Volume 20, No. 4, Pages 707—714 and see also U. S. Patent 3,934,774. While the recommended scribing and breaking procedures of these two publications differ in some respects, both state that the scribing operation must be carefully controlled and the scribing edge should be urged against the surface of the fiber with only a relatively low force. In general, the known scribing devices for notching optical fibers are designed such that the scribing edge is urged against the fiber with a force that is produced by mechanical means, for example, U.S. Patent 3,934,773 shows a scribing apparatus in the form of a lever which is pivoted intermediate its ends and which is adapted to be counterbalanced to produce the required force. It can be appreciated that where purely mechanical devices are relied upon to impose the load on the scribing edge that will produce the desired force, a high degree of precision is required in the apparatus and a measure of skill must be exercised by the technician who is forming the notch in the fiber. The present invention is directed to an improved scribing method and apparatus which is relatively simple in its construction, which can be operated without the exercise of a high degree of laboratory skill, and which will reproducibly scribe optical fibers in a manner such that upon subsequent breaking of the fibers, smooth surfaces will be obtained which will extend substantially normally of the fiber axis.

US—A—4 203 539 discloses apparatus for scribing and breaking a fiber by rotating a fiber about a cutting edge with progressively increasing force until the fiber is severed at the cutting edge. In an embodiment there is disclosed apparatus for notching an optical fiber at a notch location in preparation for breaking the fiber, the apparatus comprising a fiber holder for holding the fiber at a fiber support location and a notching edge which is located on one side of the fiber axis of a fiber held in the fiber holder said fiber being urged against the notching edge at the notch location with a force which is within a predetermined range, in which the notching edge is spaced from the fiber holder along the fiber axis by a first distance, a fiber deflector is located beside the fiber axis and is spaced from the fiber holder by a second distance, the fiber deflector and a fiber held in the fiber holder being movable towards each other and laterally of the fiber axis to deflect the fiber by a third distance, at the second distance from the fiber holder, the deflection being relatively towards the notching edge.

According to the present invention apparatus having the above identified features of the embodiment of US—A—4 203 539 is characterised in that the fiber deflector is arranged for movement laterally and transversely of the fiber axis along a closed circuit path bringing the fiber into and out of engagement with the notching edge over a predetermined path length, the first, second and third distances being selected to deflect the fiber at the notch location and urge the fiber against the notching edge at the notch location with a force which is within the predetermined range.

The invention includes a method of notching an optical fiber at a notch location in preparation for breaking the fiber, the method comprising the steps of holding the fiber at a fiber support location and urging the fiber against a notching edge at the notch location with a notching force that is within a predetermined range, the method comprising the steps of: locating the notching edge at a first distance from the fiber holder along the fiber axis of a fiber extending from the fiber holder, applying a fiber deflecting force to the fiber at a deflecting location which is spaced from the fiber holder by a second distance along the fiber axis and deflecting the fiber by a third distance so that the notch location is brought into engagement with the notching edge, and selecting the first, second, and third distances to produce a notching force within the predetermined range, characterised by laterally deflecting the fiber along a closed circuit path bringing the fiber into and out of engagement with the notching edge over a predetermined path length and selecting the first, second and third distances such that a predetermined force is exerted between the notching edge and the fiber within a range to affect notching.

The invention will now be described, by way of example with reference to the accompanying partly diagrammatic drawings in which:—

Figure 1 is a perspective view of an optical fiber having a notch therein in preparation for breaking.

Figure 2 is a view which shows the fiber after it has been broken at the notch.

Figure 3 is a section side view showing the essential elements of an apparatus in accordance with the invention, this being a diagrammatic view for the purpose of illustrating the principles of the invention.

Figures 4 to 6 are perspective diagrammatic views illustrating the sequence of steps followed in carrying out the invention.

Figure 7 is a diagrammatic view illustrating the path of movement of a fiber when it is moved towards and over the scribing edge of the apparatus.

Figure 8 is a perspective view of an apparatus in accordance with the invention.

Figure 9 is a sectional side view of the apparatus.

Figure 10 is a view taken along the lines 10—10 of Figure 9.

Figure 11 is an enlarged sectional side view of the apparatus.

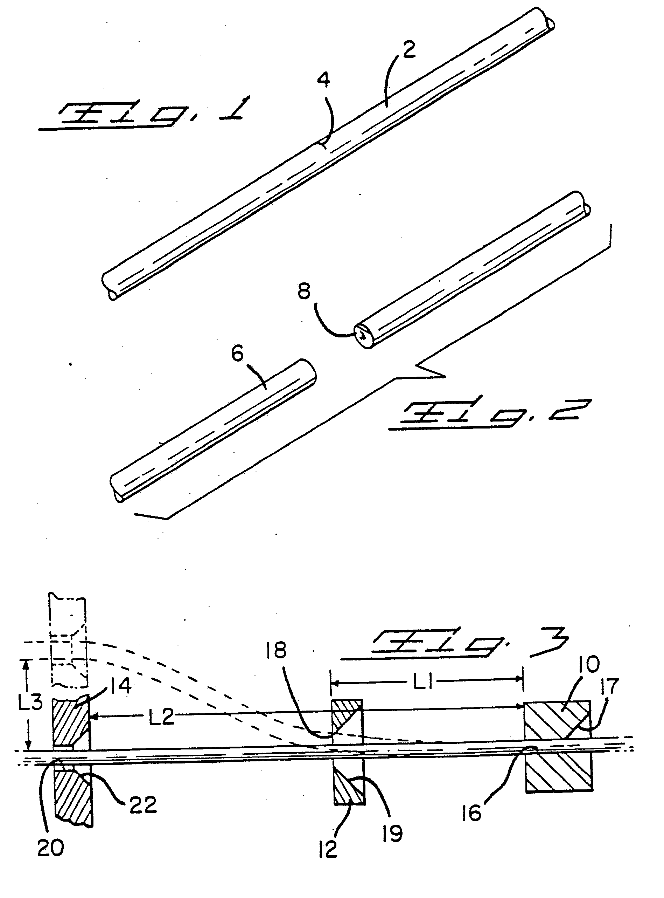

Figure 1 shows an optical fiber 2 having a notch 4 at a location at which it is desired to break the fiber. If the fiber is carefully notched and broken under controlled conditions, the surface 8 of the fiber after the end portion 6 has been broken off will be extremely smooth and will extend substantially normally of the fiber axis so that a fiber optic connecting device or splicing device can be installed on the end of the fiber without further preparation of the end surface 8.

The notch 4 is formed by moving the surface of the fiber against a notching edge and moving the fiber relative to the edge while the fiber is urged against the notching edge with a force that is within a predetermined range. In general, a force within the range of about 5 to 10 grams is preferred and if he force is unduly high, a roughened surface 8 will be produced at the fracture. It is also desirable that the fiber be moving when the force is applied, in other words, the fiber should be moved towards the notching edge and be maintained in motion while the notch is being scribed in the surface of the fiber. Figures 3 to 6 show the essential elements of an apparatus in accordance with the invention which is capable of forming the notch 45 under the ideal conditions discussed above. The invention will first be described with reference to Figures 3 to 6 and this description will be followed by a description of a specific apparatus for carrying out the invention.

The practice of the invention requires a fiber holder or fiber clamp 10, a scribing ring 12, and a fiber deflector 14. The fiber holder 10 has an opening extending therethrough as shown at 16 which has a diameter only slightly greater than the diameter of the optical fiber 2; for example, if the optical fiber has a diameter of 125 microns, the opening 16 may have a diameter of 130 microns. The fiber will then be so closely confined after it has been inserted through the opening that it is in effect clamped. A conical entrance 17 is provided in the holder 10 which leads to opening 16 to guide the fiber through the opening.

The scribing ring 12 has a conical surface 19 which leads to a circular scribing edge 18. The scribing ring is preferably of sapphire or similar material although it can be produced of a carbide or a high quality tool steel.

The fiber deflector 14 comprises a block which is relatively elongated having an opening 20 exending therethrough which extends from a conical surface 22. The opening 20 receives the fiber but can be relatively larger than the opening 16 in the fiber holder, for example, if the fiber has a diameter of 125 microns, good results will be achieved if the opening 20 has a diameter of about 600 microns.

As indicated in Figure 3, the circular scribing surface 18 is spaced from the fiber holder 10 by a first distance indicated as $L_1$ and the fiber deflector is separated from the fiber holder by a second distance $L_2$ which is greater than $L_1$. The fiber deflector moves laterally of the fiber axis (the axis of a fiber extending from the fiber holder as shown in Figure 3) and deflects the fiber a distance $L_3$ in the vicinity of the fiber deflector. These distances are important to the practice of the invention for reasons which will be discussed below.

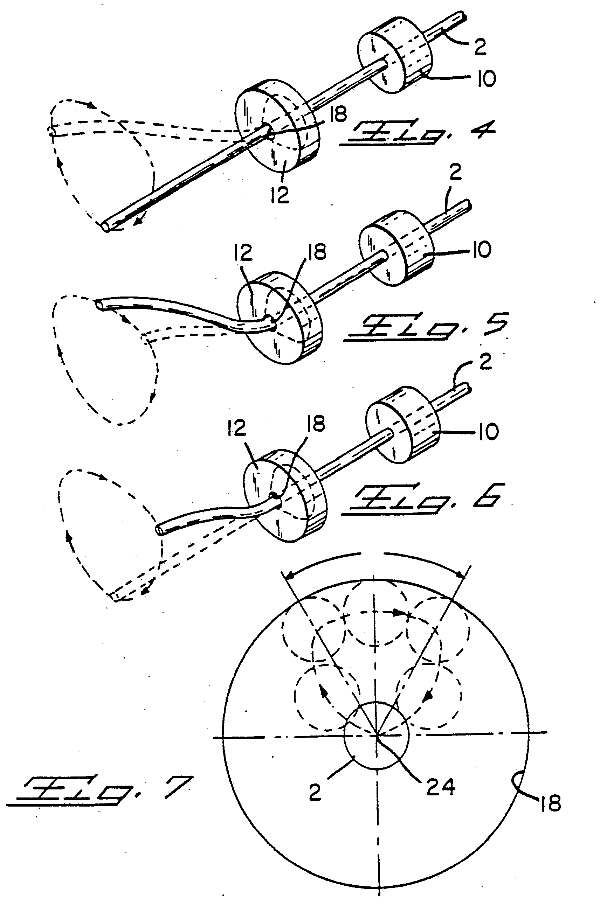

Referring now to Figures 4 to 6, the notch 4 is produced in the fiber by threading the fiber through the fiber holder 10, through the central opening in the scribing ring 12, and through the opening 20 in the fiber deflector. The deflector is then moved laterally of the fiber axis and parallel to the fiber axis as shown in Figure 7 and the fiber is as a result flexed in the manner of a cantilever beam. The deflection is greatest in the vicinity of the fiber deflector 14 however, the beam is deflected along most of its length and in the vicinity of the scribing ring 12, the beam is deflected by an amount sufficient to bring the desired notch location against the circular edge 18 of the scribing ring 12. The fiber is moved parallel to its axis along this edge through a predetermined scribing angle indicated in Figure 7 and then is returned to its starting position so that its axis corresponds with the fiber axis or reference axis 24.

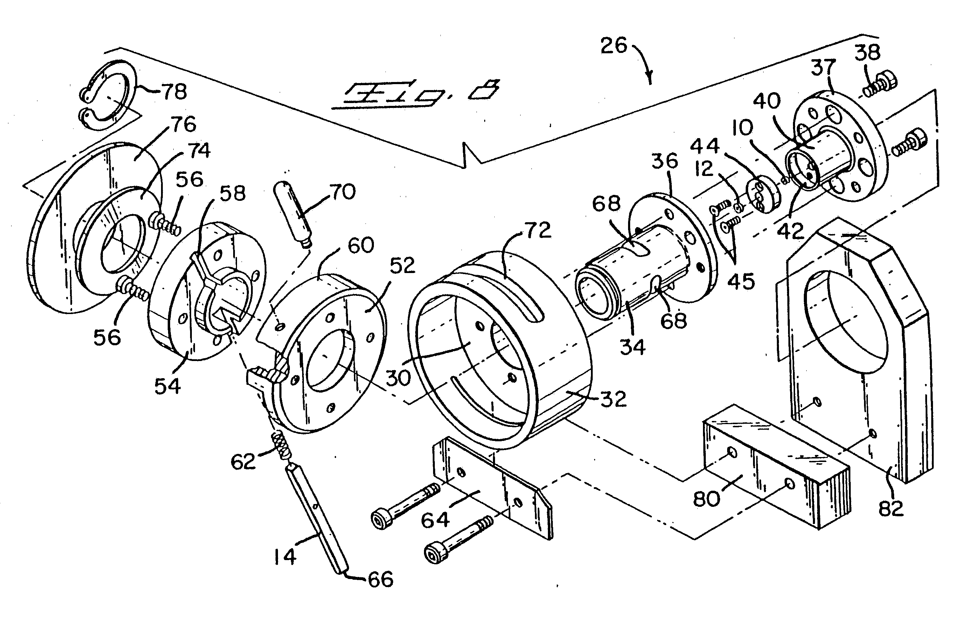

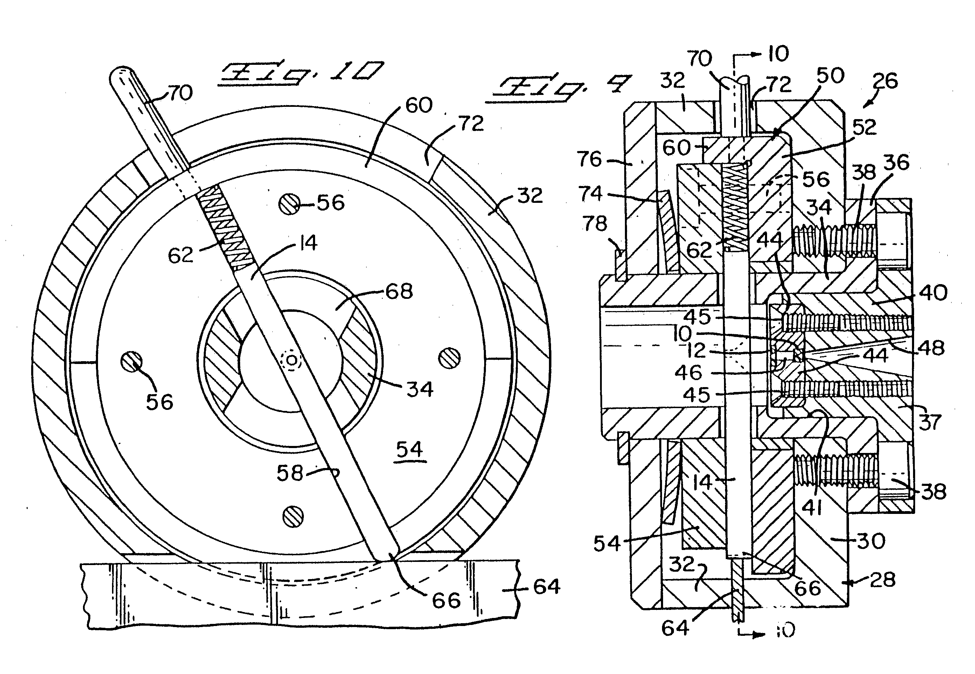

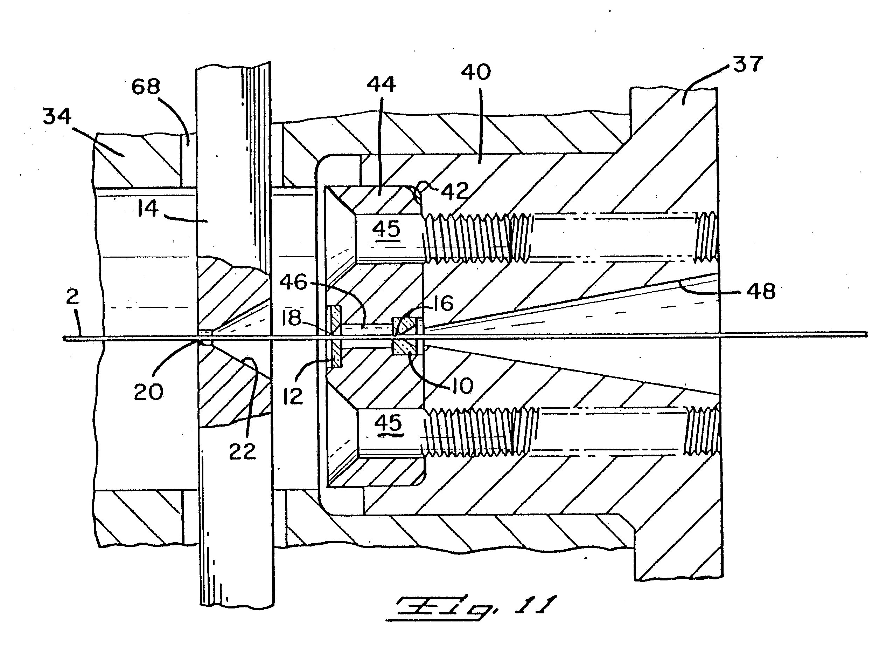

Figures 8 to 10 show a specific form of apparatus 26 for carrying out the invention which incorporates the three essential elements disclosed and described in Figures 3 to 6. The apparatus comprises a frame 28 which is composed of a vertically extending circular plate 30 having a flange 32 extending from its edge. A hollow sleeve or bushing 34 is mounted in a central opening in the frame and has an outwardly extending flange 36 which is secured to the right-hand surface (as viewed in Figure 9) of the plate 30 by suitable fasteners 38. A cylindrical adapter 40 is received in a counterbore 41 in the bushing 34 and has a flange 37 through which fasteners 38 extend.

The adaptor 40 has a recess 42 in which there is contained a support block 44 that is secured to the adapter 40 by fasteners 45. The block 44 has an axially extending bore 46 which is counterbored on the right-hand side to receive the holder 10 and which is counterbored on its left-hand side to receive the scribing ring 12. Adapter 40 has a recess extending therein that is conically tapered as shown at 48 so that the optical fiber can be pushed into this recess and will be guided into the opening 16 in the fiber holder and through the central opening in the scribing ring 12.

The fiber deflector 14 is contained in a guide ring assembly 50 which is composed of two rings 52, 54 which are secured to each other by fasteners 56. A slot 58 is provided in the surface of the ring 54 which is opposed to the ring 52 and the deflector 14 is slidably received in this slot. The ring 52 has a flange 60 which extends over the upper end of the slot as viewed in Figure 9 and a spring 62 is positioned between the upper end of the deflector and the surface of this flange so that the deflector is biased downwardly as viewed in Figure 9. The lower end 66 of the deflector 14 bears against the surface of a camming bar 64 which causes the deflector to move relative to the assembly 50 when the assembly is rotated as described below. The assembly has a handle 70 that extends through a slot 72 in the flange 32. Additionally, slots 68 are provided in the bushing 34 to permit relative movement of the central portion of the deflector that extends through the bushing 34.

A cover plate 76 is mounted against the flange 32 and retained in position by a lock washer 78. A spring washer 74 is positioned in surrounding relationship to the bushing 34 and between the opposed surfaces of the ring 54 and the surface of the cover plate.

The apparatus as described above may be suitably mounted on a support 80, 82 as shown or may be provided with a handle if desired so that it can be used as a hand tool.

In use, the handle 70 is moved to one of the extreme positions, to the limit of its travel in either direction, and the optical fiber is inserted into the adapter 40, through the aligned fiber holder and scribe member and through the opening in the deflector to the position shown in Figure 9. Thereafter, the handle 70 is moved to its other extreme position and the fiber will be moved along the path shown in Figure 7 to form the notch.

In the practice of the invention, the fiber is moved against the scribing edge 18 and the scribing force between the edge and the surface of the fiber is established at the instant that the fiber comes into contact with the edge. This is regarded as an advantageous technique for scribing a notch as compared to the technique of placing the edge against the surface of the fiber under no load conditions and then imposing the load on the scribing edge. The latter technique is believed by some to cause chipping of he fiber while the notch is being formed and chipping in turn leads to an imperfect fractured surface which is less suitable for an optical splice.

The scribing angle, the arcuate or circumferential extent of the notch, formed by the disclosed form of apparatus is about 60 degrees however, the method of the invention can be used to form a notch which extends entirely around the circumference of the fiber. It has been found however that a notch of limited arcuate extent will produce excellent results if the fiber is later broken in a properly controlled manner, for example, by means of the method and apparatus disclosed in U. S. Application Serial No. 551,525 filed November 14, 1983.

A salient feature of the invention is that the scribing force is established by the flexure of the fiber. Since the fiber has a small diameter and is quite flimsy, the first, second, and third distances can be selected to produce a scribing force which is within the 5 to 10 gram range.

**Claims**

1. Apparatus (26) for notching an optical fiber (2) at a notch lcoation (4) in preparation for breaking the fiber, the apparatus comprising a fiber holder (10) for holding the fiber at a fiber support location and a notching edge (18) which is located on one side of the fiber axis of a fiber (2) held in the fiber holder (10) said fiber (2) being urged against the notching edge (18) at the notch location with a force which is within a predetermined range, in which the notching edge (18) is spaced from the fiber holder along the fiber axis by a first distance ($L_1$), a fiber deflector (14) is located beside the fiber axis and is spaced from the fiber holder (10) by a second distance ($L_2$), the fiber deflector (14) and a fiber (2) held in the fiber holder (10) being movable relatively towards each other and laterally of the fiber axis to deflect the fiber by a third distance ($L_3$), at the second distance ($L_2$) from the fiber holder (10), the deflection being towards the notching edge, characterised in that the fiber deflector (14) is arranged for movement laterally and transversely of the fiber axis along a closed circuit path bringing the fiber into and out of engagement with the notching edge (18) over a predetermined path length, the first ($L_1$), second ($L_2$) and third ($L_3$) distances being selected to deflect the fiber (2) at the notch location (4) and urge the fiber (2) against the notching edge (18) at the notch location with a force which is within the predetermined range.

2. Apparatus (26) for notching an optical fiber (2) as set forth in claim 1 characterised in that the second distance ($L_2$) is greater than the first distance ($L_1$).

3. Apparatus (26) for notching an optical fiber (2) as set forth in claim 2 characterised in that the notching edge (18) at least partially surrounds the fiber axis.

4. Apparatus (26) for notching an optical fiber (2) as set forth in claim 2 characterised in that the notching edge (18) is a circular edge which surrounds the fiber axis.

5. Apparatus (26) for notching an optical fiber (2) as set forth in claim 4 characterised in that the fiber holder (10) comprises a holder block having an opening (16) extending therethrough which receives fiber (2).

6. Apparatus (26) for notching an optical fiber (2) as set forth in claim 4 characterised in that the fiber deflector (14) comprises a deflector block having an opening (20) extending therethrough which receives the fiber.

7. Apparatus (26) for notching an optical fiber (2) as set forth in claim 3 characterised in that the fiber deflector (14) comprises a deflector block having an opening (20) extending therethrough which receives the fiber, and a deflector actuator (50) which moves the deflector block laterally of the fiber axis along a closed circuit path which includes a segment that extends parallel to the fiber axis whereby the fiber is moved over the notching edge (18).

8. Apparatus (26) for notching an optical fiber (2) as set forth in claim 7 characterised in that the deflector actuator comprises a rotatable guide (52) which is coaxially mounted with respect to the fiber axis, the deflector block (14) being slidably mounted in the guide (52), and a cam (64) which causes the movement of the deflector block when the guide (52) is rotated.

9. A method of notching an optical fiber (2) at a notch location (4) in preparation for breaking the fiber, the method comprising the steps of holding the fiber at a fiber support location (10) and urging the fiber (2) against a notching edge (18) at the notch location (4) with a notching force that is within a predetermined range, the method comprising the steps of: locating the notching edge (18) at a first distance ($L_1$) from the fiber holder (10) along the fiber axis of a fiber extending from the fiber holder, applying a fiber deflecting force to the fiber (2) at a deflecting location (20) which is spaced from the fiber holder (10) by a second distance ($L_2$) along the fiber axis and deflecting the fiber by a third distance ($L_3$) so that the notch location (4) is brought into engagement with the notching edge (18), characterised by laterally deflecting the fiber (2) along a closed circuit path bringing the fiber (2) into and out of engagement with the notching edge over a predetermined path length and selecting the first, second and third distances ($L_1$, $L_2$, $L_3$) such that a predetermined force is exerted between the notching edge (18) and the fiber (2) within a range to effect notching.

10. A method of notching an optical fiber as set forth in claim 9 characterised in that the second distance ($L_2$) is greater than the first distance ($L_1$) and the fiber (2) is moved transversely of the fiber axis over the notching edge (18) to produce a circumferentially extending notch at the notch location (4).

**Patentansprüche**

1. Vorrichtung (26) zum Kerben einer optischen Faser (2) an einer Kerbstelle (4) zur Vorbereitung zum Brechen der Faser, mit einem Faserhalter (10) zum Halten der Faser an einer Faserhaltestelle und mit einer Kerbkante (18), die an einer Seite der Faserachse einer Faser (2) angeordnet ist, welche in dem Faserhalter (10) gehalten ist, wobei die Faser (2) gegen die Kerbkante (18) an der Kebstelle mit einer Kraft gedrückt wird, welche innerhalb eines vobestimmten Bereichs liegt, wobei ferner die Kerbkante (18) von dem Faserhalter entlang der Faserachse um einen ersten Abstand ($L_1$) beabstandet ist, wobei ein Faserdeflektor (14) neben der Faserachse gelegen ist und in einem zweiten Abstand ($L_2$) von dem Faserhalter (10) beabstandet ist, wobei der Faserdeflektor (14) und eine Faser (2), die in dem Faserhalter (10) gehalten ist, relativ zueinander und seitlich zur Faserachse bewegbar sind, um die Faser um einen dritten Abstand ($L_3$) an dem zweiten Abstand ($L_2$) von dem Faserhalter (10) auszulenken, und wobei die Ablenkung zur Kerbkante hin erfolgt, dadurch gekennzeichnet, daß der Faserdeflektor zur Bewegung seitlich und quer zur Faserachse entlang eines geschlossenen Kreispfades angeordnet ist, welcher die Faser in Eingriff und außer Eingriff mit der Kerbkante (18) über eine vorbestimmte Pfadlänge bringt, daß der erste ($L_1$), der zweite ($L_2$) und der dritte ($L_3$) Abstand derart ausgewählt sind, daß die Faser (2) an der Kerbstelle (4) ausgelenkt und die Faser (2) gegen die Kerbkante (18) an der Kerbstelle gedrückt wird, und zwar mit einer Kraft, die innerhalb eines vorbestimmten Bereichs liegt.

2. Vorrichtung (26) zum Kerben einer optischen Faser (2) nach Anspruch 1, dadurch gekennzeichnet, daß der zweite Abstand ($L_2$) größer ist als der erste Abstand ($L_1$).

3. Vorrichtung (26) zum Kerben einer optischen Faser (2) nach Anspruch 2, dadurch gekennzeichnet, daß die Kerbkante (18) wenigstens teilweise die Faserachse umgibt.

4. Vorrichtung (26) zum Kerben einer optischen Faser (2) nach Anspruch 2, dadurch gekennzeichnet, daß die Kerbkante (18) eine kreisfömige Kante ist, welche die Faserachse umgibt.

5. Vorrichtung (26) zum Kerben einer optischen Faser (2) nach Anspruch 4, dadurch gekennzeichnet, daß der Faserhalter (10) einen Halterblock umfaßt, der eine Öffnung (16) besitzt, die sich durch ihn hindurcherstrecket und die Faser (2) aufnimmt.

6. Vorrichtung (26) zum Kerben einer optischen Faser (2) nach Anspruch 4, dadurch gekennzeichnet, daß der Faserdeflektor (14) einen Deflektorblock umfaßt, welcher eine Öffnung (20) besitzt, die sich durch ihn hindurcherstreckt und die Faser aufnimmt.

7. Vorrichtung (26) zum Kerben einer optischen Faser (2) nach Anspruch 3, dadurch gekennzeichnet, daß der Faserdeflektor (14) einen Deflektorblock umfaßt, welche eine Öffnung (20) besitzt, die sich durch ihn hindurcherstreckt und die Faser aufnimmt, sowie einen Deflektorbetätiger (50), welcher den Deflektorblock lateral zur Faserachse entlang eines geschlossenen Kreispfades bewegt, welcher ein Segment besitzt, das sich parallel zur Faserachse erstreckt, wodurch die Faser über die Kerbkante (18) bewegt wird.

8. Vorrichtung (26) zum Kerben einer optischen Faser (2) nach Anspruch 7, dadurch gekennzeichnet, daß der Deflektorbetätiger eine drehbare Führung (52) umfaßt, welche koaxial bezüglich der Faserachse montiert ist, wobei der Deflektorblock (14) gleitend in der Führung (52) montiert ist, und eine Nocke (64), welche die Bewegung des Deflektorblocks verursacht, wenn die Führung (52) gedreht wird.

9. Verfahren zum Kerben einer optischen Faser (2) an einer Kerbstelle (4) in Vorbereitung zum Brechen der Faser, wobei das Verfahren die Schritte umfaßt, daß die Faser an einer Faserhaltestelle (10) gehalten wird und die Faser (2) gegen eine Kerbkante (18) an der Kerbstelle (4) gedrückt wird, und zwar mit einer Kerbkraft, die Innerhalb eines vorbestimmten Bereichs liegt, wobei das Verfahren die folgenden Schritte umfaßt: Positionierung der Kerbkante (18) in einem ersten Abstand ($L_1$) von dem Faserhalter (10) entlang der Faserachse einer Faser, die sich von dem Faserhalter weg erstreckt, ferner Anlegen einer Faserauslenkkraft an die Faser (2) an einer Auslenkstelle (20), die von dem Faserhalter (10) aus in einem zweiten Absand ($L_2$) entlang der Faserachse beabstandet wird, sowie Auslenken der Faser um einen dritten Abstand ($L_3$), so daß die Kerbstelle (4) in Eingriff mit der Kerbkante (18) gebracht wird, dadurch gekennzeichnet, daß die Faser (2) entlang eines geschlossenen Schleifenpfades, der die Faser (2) in Eingriff und außer Eingriff mit der Kerbkante über eine vorbestimmte Pfadlänge bringt, ausgelenkt wird und daß der erste, der zweite und der dritte Abstand ($L_1$, $L_2$, $L_3$) derart ausgewählt werden, daß eine vorbestimmte Kraft zwischen der Kerbkante (18) und der Faser (2) innerhalb eines Bereichs ausgeübt wird, um das Kerben zu bewirken.

10. Verfahren zum Kerben einer optischen Faser nach Anspruch 9, dadurch gekennzeichnet, daß der zweite Abstand ($L_2$) größer ist als der erste Abstand ($L_1$) und die Faser (2) quer zur Faserachse über die Kerbkante (18) bewegt wird, um eine sich umfangsmäßig erstreckende Kerbe an der Kerbstelle (4) zu erzeugen.

## Revendications

1. Appareil (26) pour entailler une fibre optique (2) à un emplacement d'entaille (4) en préparation à la rupture de la fibre, l'appareil comprenant un porte-fibre (10) destiné à maintenir la fibre en une position de support de fibre et une arête d'entaillage (18) qui est placée sur un premier côté de l'axe d'une fibre (2) maintenue dans le porte-fibre (10), ladite fibre (2) étant repoussée contre l'arête d'entaillage (18) à l'emplacement d'entaille sous une force comprise dans une plage prédéterminée où l'arête d'entaille (18) est espacée du porte-fibre le long de l'axe de la fibre, d'une première distance ($L_1$), un déflecteur de fibre (14) est placé à côté de l'axe de la fibre et est espacé du portefibre (19) d'une deuxième distance ($L_2$), le déflecteur (14) de fibre et la fibre (2) maintenue dans le porte-fibre (10) pouvant être déplacés l'un vers l'autre et latéralement à l'axe de la fibre pour dévier la fibre d'une troisième distance ($L_3$), à la deuxième distance ($L_2$) du porte-fibre (10), la déviation étant dirigée vers l'arête d'entaille, caractérisé en ce que le déflecteur de fibre (14) est agencé pour se déplacer latéralement et transversalement à l'axe de la fibre le long d'un trajet en circuit fermé amenant la fibre en contact avec l'arête d'entaillage (18) et hors de ce contact sur une longueur de trajet prédéterminée, les première ($L_1$), deuxième ($L_2$) et troisième ($L_3$) distances étant choisies pour dévier la fibre (2) à l'emplacement (4) de l'entaille et pour pousser la fibre (2) contre l'arête d'entaillage (18) à l'emplacement de l'entaille sous une force comprise dans la plage prédéterminée.

2. Appareil (26) pour entailler une fibre optique (2) selon la revendication 1, caractérisé en ce que la deuxième distance ($L_2$) est supérieure à la première distance ($L_1$).

3. Appareil (26) pour entailler une fibre optique (2) selon la revendication 2, caractérisé en ce que l'arête d'entaillage (18) entoure au moins partiellement l'laxe de la fibre.

4. Appareil (26) pour entailler une fibre optique (2) selon la revendication 2, caractérisé en ce que l'arête d'entaillage (18) est une arête circulaire qui entoure l'axe de la fibre.

5. Appareil (26) pour entailler une fibre optique (2) selon la revendication 4, caractérisé en ce que le porte-fibre (10) comprend un bloc de support traversé d'une ouverture (16) qui reçoit la fibre (2).

6. Appareil (26) pour entailler une fibre optique (2) selon la revendication 4, caractérisé en ce que le déflecteur (14) de fibre comprend un bloc déflecteur traversé d'une ouverture (20) qui reçoit la fibre.

7. Appareil (26) pour entailler une fibre optique (2) selon la revendication 3, caractérisé en ce que le déflecteur (14) de fibre comprend un bloc déflecteur traversé d'une ouverture (20) qui reçoit la fibre, et un actionneur (50) de déflecteur qui déplace le bloc déflecteur latéralement à l'axe de la fibre le long d'un trajet en circuit fermé qui comprend un segment s'étendant parallèlement à l'axe de la fibre de manière que la fibre soit déplacée sur l'arête d'entaillage (18).

8. Appareil (26) pour entailler une fibre optique (2) selon la revendication 7, caractérisé en ce que l'actionneur du déflecteur comprend un guide rotatif (52) qui est monté coaxialement à l'axe de la fibre, le bloc déflecteur (14) étant monté de façon coulissante dans le guide (52) et une came (64) qui provoque le mouvement du bloc déflecteur lorsque le guide (52) est en rotation.

9. Procédé pour entailler une fibre optique (2) à un emplacement de fibre (4) en préparation à la rupture de la fibre, le procédé comprenant les étapes qui consistent à maintenir la fibre dans une position (10) de support de fibre et à repousser la fibre (2) contre une arête d'entaillage (18) à l'emplacement (4) de l'entaille, sous une force d'entaillage comprise dans une plage prédéterminée, le procédé comprenant les étapes qui consistent : à placer l'arête d'entaillage (18) à une première distance ($L_1$) du porte-fibre (10) le long de l'axe d'une fibre s'étendant à partir du porte-fibre, à appliquer une forte déflexion de fibre à la fibre (2) en une position (20) de déflexion qui est espacée du porte-fibre (10) d'une deuxième distance ($L_2$) le long de l'axe de la fibre et à dévier la fibre d'une troisième distance ($L_3$) afin que la position (4) de l'entaille soit amenée en contact avec l'arête d'entaillage (18), caractérisé en ce qu'il consiste à dévier latéralement la fibre (2) le long d'un trajet en circuit fermé amenant la fibre (2) en contact avec l'arête d'entaillage et hors de ce contact sur une longueur de trajet prédéterminée, et à choisir les première, deuxième et troisième distances (L₁, L₂, L₃) de manière qu'une force prédéterminée soit exercée entre l'arête d'entaillage (18) et la fibre (2), dans une plage telle que l'entaillage est réalisé.

10. Procédé pour entailler une fibre optique selon la revendicaiton 9, caractérisé en ce que la deuxième distance (L₂) est supérieure à la première distance (L₁) et la fibre (2) est déplacée transversalement à l'axe de la fibre sur l'arête d'entaillage (18) pour produire une entaille s'étendant circonférentiellement à l'emplacement (4) de l'entaille.

0 155 794

Fig. 1

2

4

Fig. 2

8

6

Fig. 3

18

L1

10

17

14

L3

L2

16

22

20

12

19

_Fig. 4_

_Fig. 5_

_Fig. 6_

_Fig. 7_

Fig. 8

78
76
74
56
58
70
60
52
54
56
56
62
14
66
64
80
82
26
37
38
40
10
44
12
36
42
45
68
72
68
34
30
32

0 155 794

Fig. 10

Fig. 9

0 155 794

Fig. 11